# EUROPEAN PATENT APPLICATION

(11) **EP 4 679 369 A1**
(43) Date of publication of application: **14.01.2026**
(21) Application number: 25182188.0
(22) Date of filing: 11.06.2025
(51) Int. Cl.: G06T 7/73, B64D 39/00

(54) **COLORED POINT CLOUD BASED REFINEMENT FOR POSE ESTIMATION**

(30) Priority: 10.07.2024 US 202418768862
(71) Applicant: The Boeing Company, Arlington, VA 22202 (US)
(72) Inventor: HUNG, Fan Hin, ARLINGTON, 22202 (US); KHOSLA, Deepak, ARLINGTON, 22202 (US); NGUYEN, Leon, ARLINGTON, 22202 (US); CHAMBERLAIN, Shawn M., ARLINGTON, 22202 (US); LATIB, Tameez, ARLINGTON, 22202 (US); RATZLAFF, Neale James, ARLINGTON, 22202 (US)
(74) Representative: Plasseraud IP

(57) **Abstract**

A pose estimation system comprising a computer system and a pose estimator located in the computer system. The pose estimator is configured to estimate initial point cloud colors (222) for points (223) in a colored point cloud (224, 410) of a surface (225) of an object (201) using frames (221) in a video (105, 202) of the object (201) and initial pose estimate (241) for the object (201) in the frames (221). The pose estimator is configured to adjust the initial pose estimate (241) using the frames (221) and the colored point cloud (224, 410) to form updated pose estimates (227). The pose estimator is configured to determine updated point cloud colors (226) for the points (223) in the colored point cloud (224, 410) using the frames (221) in the video (105, 202) and the updated pose estimates (227). The pose estimator is configured to repeat adjusting the updated pose estimates (227) using the frames (221) and the colored point cloud (224, 410) and determining the updated point cloud colors (226) for the points (223) in the colored point cloud (224, 410) using the frames (221) in the video (105, 202) and the updated pose estimates (227) until the updated pose estimates (227) meet a threshold (228).

## Description

### BACKGROUND INFORMATION

### 1. Field:

The present disclosure relates generally to refueling aircraft and in particular, to pose estimation for training a machine learning model for controlling aircraft refueling operations.

### 2. Background:

With air-to-air refueling a six degree of freedom (6DoF) position and orientation is estimated for a receiver aircraft following behind a fuel tanker aircraft. The position and orientation is referred to as a pose. The fuel tanker aircraft is equipped with a refueling boom that has an end that can be maneuvered to be inserted into a receptacle in the receiver aircraft to begin a refueling operation.

For example, a camera on the fuel tanker aircraft can generate images of the boom and receiver aircraft. A machine learning model can perform real time 6DoF pose estimation as part of a process to control the refueling operation using the boom.

### SUMMARY

According to a first aspect, the present disclosure provides a computer implemented method for pose estimation as defined in pending claims.

According to another aspect, the present disclosure provides a pose estimation system as defined in pending claims .

Still according to another aspect of the present disclosure, a computer program product for pose estimation as defined in pending claims is defined.

Still another aspect of the present disclosure, a fueling tanker aircraft as defined in pending claim is provided.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of a pose estimation for a receiver aircraft in accordance with an illustrative embodiment;
**Figure 2** is an illustration of a block diagram of a pose environment in accordance with an illustrative embodiment;
**Figure 3** is an illustration of a use of pose estimates in accordance with an illustrative embodiment;
**Figure 4** is an illustration of a frame and a colored point cloud in accordance with an illustrative embodiment;
**Figure 5** is an illustration of estimating colors for a colored point cloud in accordance with an illustrative embodiment;
**Figure 6** is an illustration of refining pose estimates in accordance with an illustrative embodiment;
**Figure 7** is an illustration of iteratively performing color estimation and pose estimation to refine pose estimates for frames in a video in accordance with an illustrative embodiment;
**Figure 8** is an illustration of a flowchart of a process for this estimation in accordance with an illustrative embodiment;
**Figure 9** is an illustration of a flowchart of a process for estimating point cloud colors in accordance with an illustrative embodiment;
**Figure 10** is an illustration of a flowchart of a process for taking into account an occluder of the object in accordance with an illustrative embodiment;
**Figure 11** is an illustration of a flowchart of a process for estimating the point cloud colors in accordance with an illustrative embodiment;
**Figure 12** is an illustration of a flowchart of a process for adjusting pose estimates in accordance with an illustrative embodiment;
**Figure 13** is an illustration of a flowchart of a process for training a machine learning model using the pose estimates in accordance with an illustrative embodiment; and
**Figure 14** is an illustration of a block diagram of a data processing system in accordance with an illustrative embodiment.

### DETAILED DESCRIPTION

The illustrative embodiments recognize and take into account one or more different considerations as described herein. For example, obtaining the actual ground truth 6DoF pose of a receiver aircraft in real-world data is more difficult than desired for training a machine learning model to estimate the pose of the receiver aircraft for use in controlling the refueling operation.

Global positioning system (GPS) data generally does not offer a level of fidelity required for air-to-air refueling. Data from other sensors such as external lidars or inertial measurement units (IMUs) are difficult to synchronize temporally with camera frame timing and geometrically with the camera's mounting angle to a desired level of precision for this type of refueling operation involving a tanker aircraft and a receiver aircraft.

With these issues, training a machine learning model to generate a pose estimation for a receiver aircraft can be more difficult than desired because of the challenges in obtaining accurate pose estimates for a receiver aircraft in a video.

Thus, the illustrative examples provide a computer implemented method, apparatus, system, and computer program product for pose estimation. In one illustrative example, pose estimation system comprising a computer system and a pose estimator located in the computer system. The pose estimator is configured to estimate initial point cloud colors for points in a colored point cloud of a surface of an object using frames in a video of the object and initial pose estimates for the object in the frames. The pose estimator is configured to adjust the initial pose estimates using the frames and the colored point cloud to form updated pose estimates. The pose estimator is configured to determine updated point cloud colors for the points in the colored point cloud using the frames in the video and the updated pose estimates. The pose estimator is configured to repeat adjusting the updated pose estimates using the frames and the colored point cloud and determining the updated point cloud colors for the points in the colored point cloud using the frames in the video and the updated pose estimates until the updated pose estimates meet a threshold.

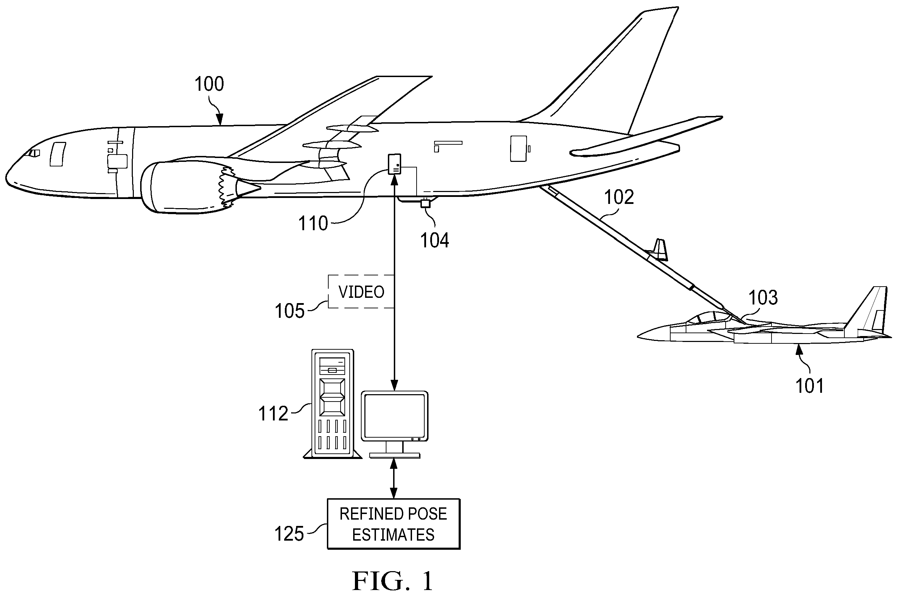

With reference now to the figures and, in particular, with reference to **Figure 1****,** an illustration of pose estimation for a receiver aircraft is depicted in accordance with an illustrative embodiment. In this illustrative example, an air-to-air refueling operation between fueling tanker aircraft **100** and receiver aircraft **101** is shown. As depicted in this example, receiver aircraft **101** is following behind fueling tanker aircraft **100.** Fueling tanker aircraft **100** is equipped with boom **102,** which is coupled to receptacle **103** of receiver aircraft **101** for the refueling operation.

In this illustrative example, boom **102** is guided to receptacle **103** and receiver aircraft **101** using images in camera imagery and video data generated by camera system **104.** In this example, the camera imagery comprises images captured by camera system **104.** The video data has metadata such as timestamps and GPS information. This information forms video **105.**

During normal operation of tanker aircraft **100,** this video can be used by image processing algorithms and models in computer **110** to determine a pose estimate for receiver aircraft **101.** In these illustrative examples, this pose estimate is a 6 degree of freedom (6DoF) pose estimate of the receiver aircraft **101.**

This pose estimate can be used by an automated controller in computer **110** to guide boom **102** into receptacle **103** of receiver aircraft **101.**

In these illustrative examples, video **105** is also sent to computer **112** for processing to generate refined pose estimates **125** for receiver aircraft **101.** This refining of the pose estimate can be a postprocessing operation performed after the refueling of receiver aircraft **101.**

In one illustrative example, refined pose estimates **125** can be used with video **105** to train a machine learning model to more accurately determine the pose estimate for a receiver aircraft. In another illustrative example, refined pose estimates **125** can be used to determine the accuracy of pose estimates generated by computer **110.** Those pose estimates can be compared to refined pose estimates **125** to determine the accuracy of current processes or models used in computer **110** for generating pose estimates used by a controller to guide boom **102** to perform air-to-air refueling operations.

Thus, in these illustrative examples, refined pose estimates **125** are pose estimates with increased accuracy when obtaining ground truth pose data for real-world videos is difficult. Refined pose estimates **125** provide a next best alternative to using absolute ground truth pose data.

The illustration of pose estimates used for air-to-air refueling operations is provided as one example of a use for refined pose estimates **125.** This illustration is not meant to limit the manner in which other illustrative examples can be implemented. In another illustrative example, video 105 can be a video of the assembly of a part performed by a robot. Refined pose estimates **125** can be generated for training a machine learning model to control the robot to perform the part assembly with increased accuracy. Still another example, can be a part assembly system.

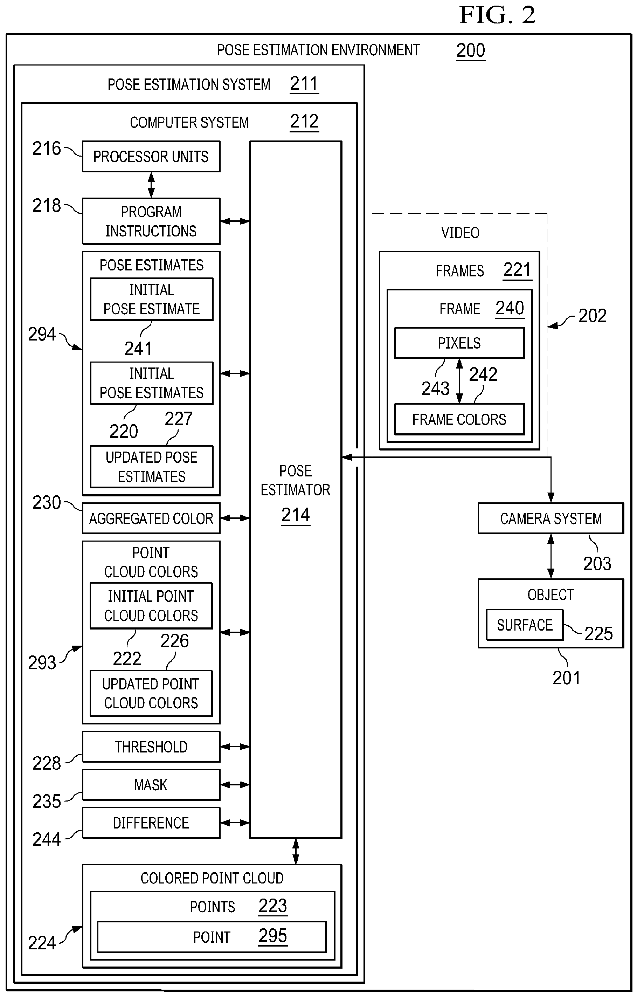

With reference now to **Figure 2****,** an illustration of a block diagram of a pose environment is depicted in accordance with an illustrative embodiment. In this illustrative example, pose estimation environment **200** includes components that can be implemented in hardware such as the hardware shown in fueling tanker aircraft **100** in **Figure 1****.**

In this illustrative example, pose estimation system **211** can estimate poses for object **201** using video **202** generated by camera system **203.** Object **201** can be selected from a group comprising a mobile platform, a stationary platform, a land-based structure, an aquatic-based structure, a space-based structure, an aircraft, a receiver aircraft, a commercial aircraft, a rotorcraft, a tilt-rotor aircraft, a tilt wing aircraft, a vertical takeoff and landing aircraft, an electrical vertical takeoff and landing vehicle, a personal air vehicle, a surface ship, a tank, a personnel carrier, a train, a spacecraft, a space station, a satellite, a submarine, an automobile, a power plant, a bridge, a dam, a house, a manufacturing facility, a building, and other types of platforms.

As depicted, pose estimation system **211** comprises computer system **212** and pose estimator **214.** Pose estimator **214** is located in computer system **212.**

Pose estimator **214** can be implemented in software, hardware, firmware or a combination thereof. When software is used, the operations performed by pose estimator **214** can be implemented in program instructions configured to run on hardware, such as a processor unit. When firmware is used, the operations performed by pose estimator **214** can be implemented in program instructions and data and stored in persistent memory to run on a processor unit. When hardware is employed, the hardware can include circuits that operate to perform the operations in pose estimator **214.**

In the illustrative examples, the hardware can take a form selected from at least one of a circuit system, an integrated circuit, an application-specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field-programmable logic array, a field-programmable gate array, and other suitable hardware devices. Additionally, the processes can be implemented in organic components integrated with inorganic components and can be comprised entirely of organic components excluding a human being. For example, the processes can be implemented as circuits in organic semiconductors.

As used herein, "a number of" when used with reference to items, means one or more items. For example, "a number of operations" is one or more operations.

Further, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combination of these items can be present. In some illustrative examples, "at least one of" can be, for example, without limitation, two of item A; one of item B; and ten of item C; four of item B and seven of item C; or other suitable combinations.

Computer system **212** is a physical hardware system and includes one or more data processing systems. When more than one data processing system is present in computer system **212,** those data processing systems are in communication with each other using a communications medium. The communications medium can be a network. The data processing systems can be selected from at least one of a computer, a server computer, a tablet computer, or some other suitable data processing system.

As depicted, computer system **212** includes a number of processor units **216** that are capable of executing program instructions **218** implementing processes in the illustrative examples. In other words, program instructions **218** are computer-readable program instructions.

As used herein, a processor unit in the number of processor units **216** is a hardware device and is comprised of hardware circuits such as those on an integrated circuit that respond to and process instructions and program code that operate a computer.

When the number of processor units **216** executes program instructions **218** for a process, the number of processor units **216** can be one or more processor units that are in the same computer or in different computers. In other words, the process can be distributed between processor units **216** on the same or different computers in computer system **212.**

Further, the number of processor units **216** can be of the same type or different types of processor units. For example, the number of processor units **216** can be selected from at least one of a single core processor, a dual-core processor, a multi-processor core, a general-purpose central processing unit (CPU), a graphics processing unit (GPU), a digital signal processor (DSP), or some other type of processor unit.

In one illustrative example, pose estimator **214** performs a number of different operations to refine pose estimates **220** for frames **221** in video **202.** A pose estimate is a position and an orientation for object **201.** The position can be described by three-dimensional coordinates. The orientation can be described using roll, pitch, and yaw. In this manner, a pose estimate can have 6 degrees of freedom.

For example, pose estimator **214** estimates initial point colors **222** in point cloud colors **293** for points **223** in colored point cloud **224** of surface **225** of object **201** using frames **221** in video **202** of object **201** and initial pose estimates **220** in pose estimates **294** for object **201** in frames **221.** In this example, colored point cloud **224** is a three-dimensional point cloud in which points **223** are located in positions in three-dimensional space.

In this illustrative example, a frame in frames **221** is a two-dimensional array of pixels that captures visual information about a scene as captured by camera system **203.** Each point in the frame corresponds to a specific point in the scene and includes color intensity values to form an image. The frame can also be referred to as the image frame. A pose estimate can the different for object **201** in different frames resulting movement of object **201** within a frame.

In this example, pose estimator **214** adjusts initial pose estimates **220** using frames **221** and colored point cloud **224.** Colored point cloud **224** includes estimates of initial point cloud colors **222** for points **223** when used to adjust initial pose estimates **220** using frames **221.**

Further, pose estimator **214** determines updated point cloud colors **226** for points **223** in colored point cloud **224** using frames **221** in video **202** and initial pose estimates **220** with adjustments. These initial pose estimates with adjustments are updated pose estimates **227.** In this example, pose estimator **214** repeats adjusting updated pose estimates **227** and determining updated point cloud colors **226** until update pose estimates **227** meet threshold **228.**

Threshold **228** can take a number of different forms. For example, threshold **228** can be an amount of error between colors in colored point cloud **224** and the colors identified for pixels corresponding to points **223** in frames **221.**

In determining these colors, points **223** are three-dimensional points that can be mapped to two-dimensional points in each of frames **221.** This mapping can also be referred to as projecting points **223** onto frames **221.** In another example, threshold **228** can be how much updated pose estimates **227** change from prior pose estimates. Once adjustments to updated pose estimates **227** are complete, these updated pose estimates are an example of refined pose estimates **125** in **Figure 1****.**

In one example, pose estimator **214** can estimate initial point cloud colors **222** by projecting colored point cloud **224** onto frame **240** in frames **221** using initial pose estimate **241** in pose estimates **220** for object **201** in frame **240.** In this example, projecting means mapping points **223** in colored point cloud **224** onto pixels **243** in frame **240** based on the perspective projection of camera system **203.** In other words, pose estimator **214** performs this projection by rendering colored point cloud **224** into a two-dimensional rendered view.

In this example, not every point in colored point cloud **224** may be mapped to a pixel in frame **240.** For example, some points in points **223** may represent a portion of surface **225** that is not visible within frame **240.** This mapping can be performed for each frame in frames **221.**

For example, the coordinates of points **223** for surface **225** of object **201** are changed from the coordinate system of colored point cloud **224** to a camera coordinate system for camera system **203.** With this change in the coordinate system, points **223** in colored point cloud **224** can be mapped into corresponding pixels in a frame. The pixels values for the pixels in frame **240** describe color by properties such as intensity and hue. This mapping can then be used to assign colors from pixels **243** in frame **240** to points **223** in colored point cloud **224** that map to pixels **243.**

In this example, a pose estimate is a pose estimate for object **201** in the particular frame being processed. In other words, each frame has a pose estimate for object **201** that is visible within the frame.

Pose estimator **214** estimates initial point cloud colors **222** for points **223** in colored point cloud **224** using pixel values for pixels in the frame. Pose estimator **214** repeats projecting and determining for each frame in frames **221.** Thus, initial point cloud colors **222** are determined for each point in colored point cloud **224.** In other words, each point can have multiple colors based on the colors determined from the corresponding points in the different frames in frames **221.**

Pose estimator **214** determines aggregated color **230** for each point in the colored point cloud using the point cloud colors for the points determined from the frames. This aggregation of colors can be formed in a number of different ways. For example, aggregated color **230** for point **295** in points **223** can be a statistical measure across the frames selected from at least one of a mean, a median, a weighted average of the point cloud colors determined for the point, or other statistical measure.

In another illustrative example, pose estimator **214** can create mask **235** identifying pixels in the frame for an occluder that blocks a view of a portion of object **201** in frame **240.** Pose estimator **214** determines colors without the pixel values that are within mask **235.** With mask **235,** initial point cloud colors **222** can be estimated for points **223** that do not use points in frames **221** that are secured by objects such as a boom when video **202** is a video of object **201** in the form of a receiver aircraft in air-to-air refueling operations in which a boom is present and blocks or obscures the view of a portion of object **201** in frames **221** in video **202.** The mask can be generated for each frame based on the position of the boom or other object occluding object **201.**

In still another illustrative example, pose estimator **214** can estimate initial point cloud colors **222** by projecting colored point cloud **224** onto frame **240** using pose estimate **241** for object **201.** Pose estimator **214** determines initial point cloud colors **222** for points **223** in colored point cloud **224** using pixel values for pixels **243** in frame **240.**

In this example, only one pose estimate is used with a frame. This can be the first frame or some other frame in frames **221.** With this example, the process forms a pose estimate frame by frame to obtain a set of coarse pose estimates for the different frames in the video from initial point cloud colors **222** generated for points **223** in colored point cloud **224.** In this example, multiple colors are not identified for different poses in different frames in frames **221.**

In this illustrative example, pose estimator **214** can adjust a pose estimate by projecting colored point cloud **224** onto frame **240** in frames **221** using initial pose estimate **241** in initial pose estimates **227** for object **201** in frame **240.** Pose estimator **214** determines difference **244** between frame colors **242** for pixels **243** in frame **240** and initial point cloud colors **222** for points **223** in colored point cloud **224** corresponding to pixels **243** in frame **240.**

Next, pose estimator **214** adjusts initial pose estimate **241** using difference **244.** The adjustments are made to reduce difference **244** between frame colors **242** in frame **240** and initial point cloud colors **222** in colored point cloud **224** that correspond to pixels **243.** This adjustment of initial pose estimate **241** results in an updated pose estimate.

Initial pose estimate **241** for object **201** in frame **240** can be adjusted by optimizing an objective function. In this example, the objective function can be a mathematical model using parameters such as the pose estimates to compute difference **244** between initial point cloud colors **222** and frame colors **242.** This objective function can reduce error by systematically adjusting parameters such as the pose estimates to reduce difference **244** between initial point cloud colors **222** and frame colors **242.** This process can be repeated until at least one of updated pose estimates **227** or difference **244** meets threshold **228.** Threshold **228** can be met, for example, when changes to pose estimates **220** no longer occur or change by an amount that is within threshold **228.** Pose estimator **214** performs this process for each frame in frames **221** to form updated pose estimates **227** for frames **221.**

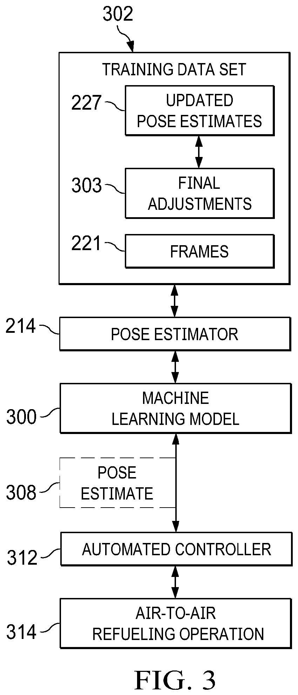

With reference next to **Figure 3****,** an illustration of a use of pose estimates is depicted in accordance with an illustrative embodiment. In the illustrative examples, the same reference numeral may be used in more than one figure. This reuse of a reference numeral in different figures represents the same element in the different figures.

In this example, a practical application of updated pose estimates **227** is depicted in which updated pose estimates **227** are used to train machine learning model **300.** In this example, object **201** takes the form of a receiver aircraft. Frames **221** are from a video of an air-to-air refueling operation with the receiver aircraft.

In this example, pose estimator **214** creates training dataset **302** that comprises frames **221** and the updated pose estimates **227** with final adjustments **303** for frames **221.** In this example, final adjustments **303** are adjustments to updated pose estimates **227** that have been completed. In this example, the accuracy is at a desired level using threshold **228.**

In this example, pose estimator **214** trains machine learning model **300** using training dataset **302.** With this training, machine learning model **300** determines pose estimate **308** of the receiver aircraft in response to receiving a live video of the receiver aircraft following a tanker aircraft. With this example, automated controller **312** can receive pose estimate **308** and use pose estimate **308** to control an air-to-air refueling operation **314** in which a refueling boom is guided to a receptacle in the receiver aircraft. In this example, automated controller **312** can be at least one of hardware or software running on a computer in a tanker aircraft. Machine learning model **300** in its trained form can also be located on the tanker aircraft. These two components can operate to perform air-to-air refueling operation **314.**

In one illustrative example, one or more solutions are present that overcome a problem with attaining pose with a sufficient level of accuracy for various automated operations. As a result, one or more solutions can provide an effect generating pose estimates for use in training machine learning models. Further, these pose estimates can also be used to determine the accuracy of machine learning models that estimate poses. The pose estimation in the different illustrative examples provide a higher level of accuracy as compared to current techniques using global positioning systems, inertial measurement units, and other types of devices. This type of pose estimation is useful when ground truth information is unavailable or harder to obtain for frames indicated.

Computer system **212** can be configured to perform at least one of the steps, operations, or actions described in the different illustrative examples using software, hardware, firmware or a combination thereof. As a result, computer system **212** operates as a special purpose computer system in which pose estimator **214** in computer system **212** enables determining pose estimates of an object in frames in a video.

In the illustrative example, the use of pose estimator **214** in computer system **212** integrates processes into a practical application for training machine learning model **300** to generate pose estimates that can be used to perform various operations.

Thus, pose estimator **214** can generate refined pose estimates that have a greater accuracy than currently available when using other sources of information such as global positioning satellite (GPS). The use of data to obtain ground truth poses can be fairly difficult. For example, the data from external lidars or inertial measurement units (IMUs) are difficult to synchronize temporally with camera frame timing. The use of manual labeling to obtain ground truth poses can be tedious and subjective.

The illustration of pose estimation environment **200** in the different components in **Figure 2-3** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, the pose estimates in **Figure 3** can be generated for other objects other than a receiver aircraft. In another example, pose estimates can be generated for use in training a machine learning model to control a robot to assemble parts. In another illustrative example, pose estimates can be generated for composite materials that are being laid up to manufacture composite parts. These pose estimates can be used to control robotic arms, gantries, end effectors, and other equipment to automatically manufacture composite parts.

In yet another illustrative example, one or more objects can be present in addition to object **201** in frames **221** and video **202.** With this example, pose estimates can be generated for the other objects in addition to object **201.** In yet another example, the threshold for stopping refinements of pose estimates **220** can be based on a number of iterations rather than difference **244** between colors.

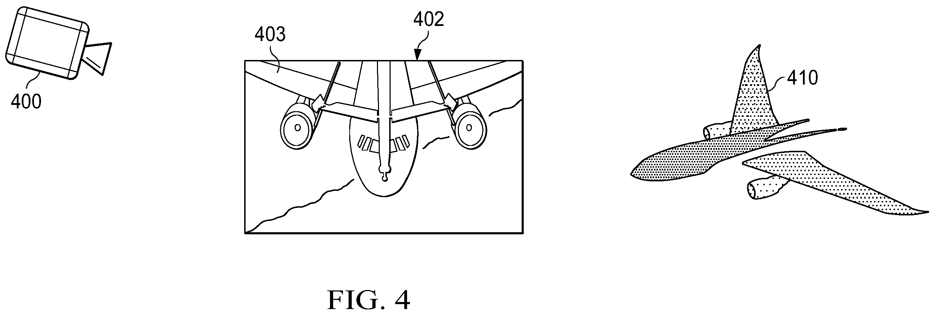

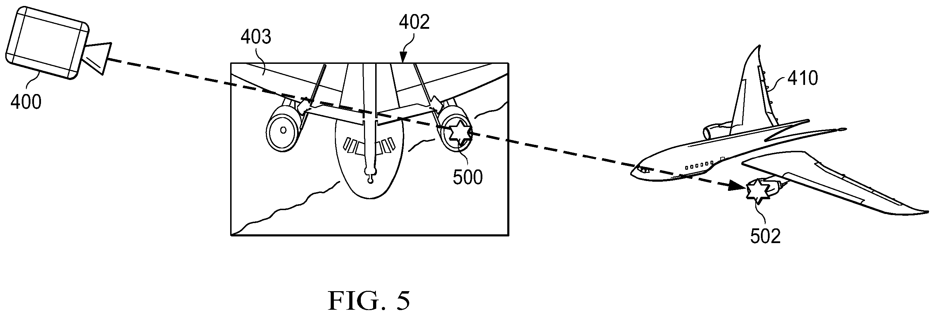

In **Figures 4** and **5** illustrate estimating colors for three-dimensional point clouds is depicted in accordance with an illustrative embodiment. The process described in these figures can be implemented by pose estimator **214** in **Figure 2****.**

With reference first to **Figure 4****,** an illustration of a frame and a colored point cloud is depicted in accordance with an illustrative embodiment. In this illustrative example, camera **400** generates frame **402.** Receiver aircraft **403** is shown in frame **402.**

Colored point cloud **410** is a visualization of coordinates and color information for a colored point cloud such as colored point cloud **224** in **Figure 2****.** In this example, the different points in this point cloud represent the surface of receiver aircraft **403.** Further, this point cloud has a pose estimate for receiver aircraft **403** in frame **402.** This is an initial pose that will be refined. This initial pose can be obtained, for example, by using a machine learning model to estimate points on receiver aircraft **403** in frame **402** that correspond to points on a three-dimensional representation of the receiver aircraft, such as colored point cloud **410,** and then using an algorithm to solve for the pose estimate based on this point correspondence, such as the Perspective n-Point (PnP) algorithm.

In this example, the estimating of colors for colored point cloud **410** can be performed using frame **402,** camera specifications for camera **400,** and a pose estimate for receiver aircraft **403** and frame **402.**

With this information, three-dimensional points in colored point cloud **410** can be mapped to pixel values using calculations from currently available three-dimensional rendering techniques. These techniques can be selected from at least one of perspective projection, orthographic projection, ray tracing, rasterization, or other suitable techniques.

For example, the pose estimate is used to move the three-dimensional point cloud coordinates for colored point cloud **410** into the frame of reference for camera **400** in a position corresponding to the location of receiver aircraft **403** in frame **402.** For example, the orientation parameters of the pose estimate can form a rotation matrix in three-dimensional space, and the position parameters of the pose estimate can form a vector in the same three-dimensional space. Then, if the pose estimate relates points from the colored point cloud frame of reference to the location of the receiver aircraft with respect to the camera frame of reference, then any point in colored point cloud **410** can be mapped to a point relative to camera **400** in a position consistent with the location of receiver aircraft **403** by applying the rotation matrix to the point and then adding the vector to the result. In this example, the coordinate system for colored point cloud **410** is rotated and translated into the coordinate system for camera **400.** These three-dimensional point cloud coordinates are used to describe the position of points in colored point cloud **410.**

Turning next to **Figure 5****,** an illustration of estimating colors for a colored point cloud is depicted in accordance with an illustrative embodiment. In this example, camera specifications for camera **400** can be used to project the three-dimensional coordinates to the two-dimensional coordinate space of frame **402.** These specifications for camera **400** can include at least one of focal length, principal point, skew, field of view, distortion parameters, image resolution, or other specifications.

With these camera specifications, a camera matrix can be constructed to perform perspective projection of three-dimensional coordinates to the two-dimensional coordinate space of frame **402.** Furthermore, if distortion parameters are known, then the resulting two-dimensional coordinates can be further transformed within the same two-dimensional coordinate space through a distortion model that describes optical aberrations consistent with the optical elements for camera **400,** such as barrel distortion or pincushion distortion.

In this depicted example, the two-dimensional coordinates can be used to reference pixels in frame **402** and retrieve color values to assign to each of points in colored point cloud **410** that map to the pixels in frame **402.** For example, the pixel information from pixel **500** can be used to assign a color to corresponding point **502** in colored point cloud **410.** In this example, corresponding point **502** maps to pixel **500.**

The processes described in **Figure 4** and **Figure 5** can be performed for each frame in the frames of a video. Each frame has a pose that is used to determine colors for colored point cloud **410.** As a result, colored point cloud **410** can have multiple color values for each point in the point cloud. The color values for each point can be aggregated to obtain the color for the points in colored point cloud **410.**

The aggregation can be performed in a number of different ways. For example, the aggregation of the colors for a point can be performed by using at least one of a mean, a median, or a weighted average or other technique to aggregate the colors determined for the point.

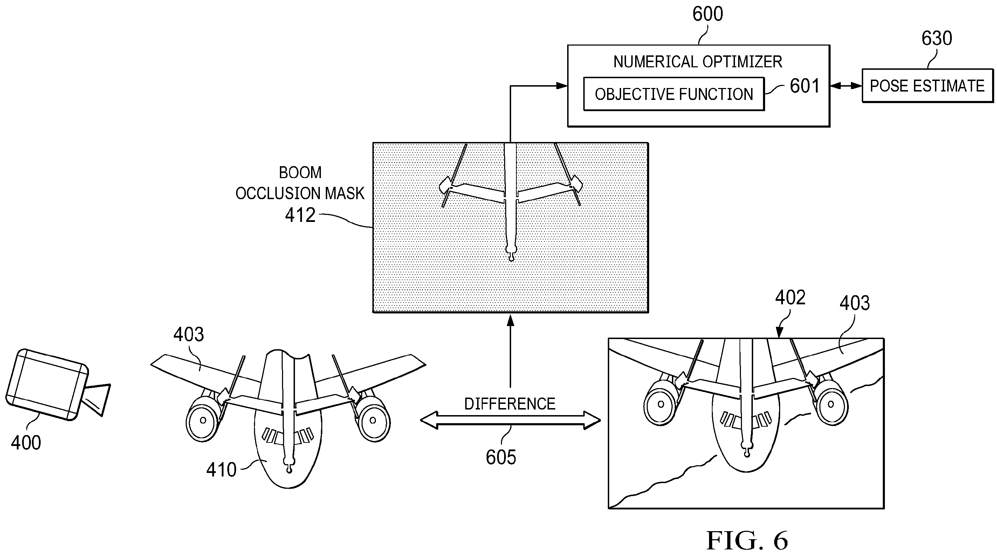

Turning now to **Figure 6****,** an illustration of refining pose estimates is depicted in accordance with an illustrative embodiment. The process in this example can be implemented in pose estimator **214** in **Figure 2****.**

The process depicted in this figure uses numerical optimizer **600** to adjust the pose estimate for frame **402.** This adjustment can be performed such that the pixel colors of receiver aircraft **403** in frame **402** match or more closely match the colors for corresponding points in colored point cloud **410** that are mapped to these pixels in frame **402.** Adjusting the pose estimate and determining the difference **605** are performed iteratively in this example and increase the accuracy of the pose estimate for receiver aircraft **403** in frame **402.**

In this illustrative example, objective function **601** is implemented in numerical optimizer **600.** Numerical optimizers search for an optimal set of parameters based on reducing an objective function by evaluating the objective function with varying sets of parameters. The objective function can also be referred to as , also known as a loss function, a cost function, or an energy function. Numerical optimizers include techniques such as Newton's method, conjugate gradient, Nelder-Mead, or other techniques.

In this example, the optimizer searches for an optimal set of 6DoF pose parameters to minimize the objective function, which is a function over the 6DoF pose parameters that indicates the degree of error in difference **605.**

In this depicted example, objective function **601** uses camera specifications for camera **400,** frame **402,** and colored point cloud **410** as fixed constants. Objective function **601** uses the pose estimate for frame **402** as an input variable and uses this pose estimate with the fixed constants to calculate the amount by which the two-dimensional rendered view of colored point cloud **410** differs from the two-dimensional view of receiver aircraft **403** in frame **402.** This amount is difference **605** and is an example of difference **244** in **Figure 2** and can also be referred to as an error.

In this illustrative example, objective function **601** uses the pose estimate for receiver aircraft **403** and frame **402** to move the three-dimensional point cloud coordinates for colored point cloud **410** into the camera's frame of reference in a position corresponding to the location of receiver aircraft **403** in frame **402.** In other words, the coordinate system for colored point cloud **410** is translated into the coordinate system for camera **400.**

Next, the three-dimensional coordinates of the points in colored point cloud **410** are projected to the two-dimensional coordinate space of frame **402** using the camera specifications. These camera specifications include, for example, focal length and image resolution. This projection maps three-dimensional points in colored point cloud **410** to two-dimensional pixels in frame **402.**

The two-dimensional coordinates for the points can be used to reference pixels in frame **402** and retrieve color values for each of points in the colored point cloud **410** that have been mapped to pixels in frame **402.**

In this example, there are two sets of color values for colored point cloud **410.** One set of colors is from the previous aggregate color determination using the frames in the video. The other set of colors are colors obtained from mapping colored point cloud **410** to the two-dimensional image in frame **402** using the pose estimate for receiver aircraft **403** in frame **402.**

In this example, objective function **601** performs a color error calculation for the pose estimate. For example, objective function **601** calculates the Euclidean distance for each point's two colors and averages the distances for all points in colored point cloud **410.** The final average value represents difference **605** in color between the mapping of the post estimate to frame **402,** and the point cloud color from aggregating the colors as described in **Figure 4** and **Figure 5****.**

Numerical optimizer **600** uses objective function **601** to adjust pose estimate **630** in an effort to reduce difference **605.** The color error calculation is performed for the adjusted pose. To refine pose estimate **630** for frame **402,** numerical optimizer **600** is an iterative process to minimize objective function **601.**

At each iteration, the numerical optimizer **600** calculates objective function **601** and determines an adjustment to pose estimate **630.** This adjustment to pose estimate **630** tries to decrease the color difference between the new color values from projecting receiver aircraft **403** onto frame **402** based on pose estimate **630** and the point cloud colors from an aggregation of colors from the frames.

This refinement of pose estimate **630** for receiver aircraft **403** in frame **402** can be repeated until difference **605** between the colors reaches a threshold. For example, numerical optimizer **600** stops when difference **605** reaches a threshold such as a pre-determined iteration limit or a pre-determined threshold for convergence.

In this illustrative example, receiver aircraft **403** in frame **402** is for an air-to-air refueling operation. With this type of application, a masking operation can be used to account for occlusion by the refueling boom. This masking is performed using pose information for the refueling boom. This pose information can be derived from known boom control parameters, sensor readings, or an estimation pipeline.

In this example, the boom pose estimate and camera specifications for camera **400** are used to render a binary mask such as boom occlusion mask **412.** This mask indicates which pixels in frame **402** are occupied by the boom. With this example, boom occlusion mask **412** is used to exclude points in colored point cloud **410** whose two-dimensional projections fall within pixels occupied by the boom.

This process using boom occlusion mask **412** is performed before objective function **601** compares the two sets of point cloud colors. As a result, colors from the boom are not included in the difference calculation.

In this example, calculating objective function **601** at the ground truth pose with the ground truth point cloud coloring results in a value of zero. In other words, the difference **605** between the colors on colored point cloud **410** and the colors from projecting receiver aircraft **403** on frame **402** is zero. This value is what numerical optimizer **600** is trying to reach when calculating objective function **601.**

However, this ideal value can only be reached with ground truth pose and ground truth point cloud coloring. In this example, numerical optimizer **600** searches for a value that is as close as possible to the ideal value. The use of objective function **601** makes the assumption that the initial pose estimate from live runtime is within a local region in pose parameter space to the ground truth pose. This assumption makes the numerical optimization a theoretically well-posed problem where it is tractable to obtain an adjusted pose estimate that is closer to the ground truth pose.

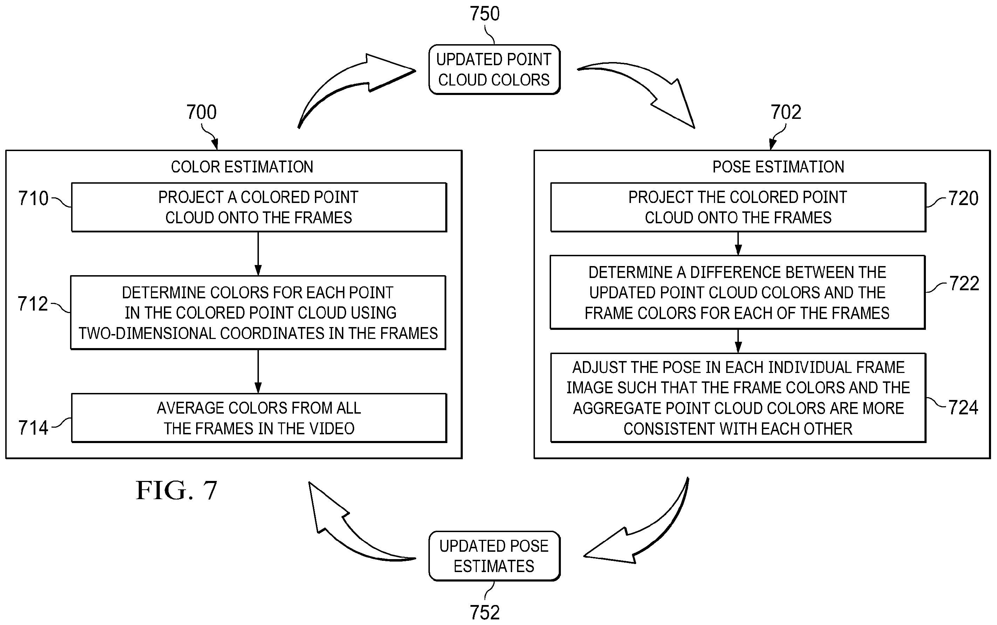

Turning next to **Figure 7****,** an illustration of iteratively performing color estimation and pose estimation to refine pose estimates for frames in a video is depicted in accordance with an illustrative embodiment. This dataflow can be implemented in pose estimator **214 in** **Figure 2****.**

In this example, the dataflow implements color estimation **700** and pose estimation **702.** These blocks iteratively perform operations to refine pose estimates for frames in a video.

As depicted, color estimation **700** projects a colored point cloud onto the frames (operation **710).** The projection correlates points in the colored point cloud to pixels in the frames using the pose estimates for the frames.

Color estimation **700** determines colors for each point in the colored point cloud using two-dimensional coordinates in the frames (operation **712).** In operation **712,** points in the colored point cloud are mapped to pixels in the frames. Not all of the points are mapped to the pixels in each frame. The pixel values of the pixels are used to assign colors to the points mapped to pixels in the frames using the two-dimensional coordinates in the frames determined for the points. Each point can have multiple colors if multiple frames are present.

Color estimation **700** averages colors from all the frames in the video (operation **714).** In operation **714,** the colors for each point are averaged to determine an updated color for the point. Thus, color estimation **700** aggregates colors for individual pose estimates throughout frames in the video. The result is represented as updated point cloud colors **750** in a colored point cloud. These updated point cloud colors are an aggregation of point cloud colors generated for each of the points in the colored point cloud.

Updated point cloud colors **750** are used by pose estimation **702** to generate refined pose estimates that are updated pose estimates **752.** In this example, pose estimation **702** projects the colored point cloud onto the frames (operation **720).** Pose estimation **702** determines a difference between the updated point cloud colors **750** and the frame colors for each of the frames (operation **722).**

In this example, pose estimation **702** adjusts the pose in each individual frame image such that the frame colors and the aggregate point cloud colors are more consistent with each other (operation **724).** These adjustments form updated pose estimates **752.**

The pose estimates with the updates form updated post estimates **752.** These updated pose estimates are used in color estimation **700** to determine aggregate colors for the colored point cloud. The process can be repeated using updated pose estimates **752.** Each loop through the feedback cycle enforces greater frame to frame color consistency.

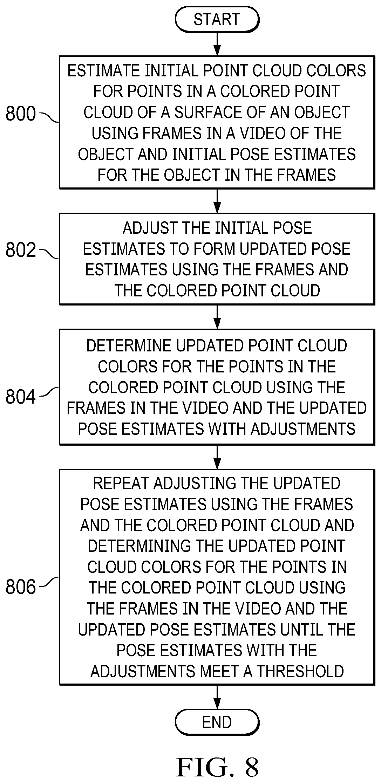

Turning next to **Figure 8****,** an illustration of a flowchart of a process for this estimation is depicted in accordance with an illustrative embodiment. The process in **Figure** 8 can be implemented in hardware, software, or both. When implemented in software, the process can take the form of program instructions that are run by one of more processor units located in one or more hardware devices in one or more computer systems. For example, the process can be implemented in pose estimator **214** in computer system **212 in** **Figure 2****.**

The process estimates initial point cloud colors for points in a colored point cloud of a surface of an object using frames in a video of the object and initial pose estimates for the object in the frames (operation **800).** The process adjusts the initial pose estimates to form updated pose estimates using the frames and the colored point cloud (operation **802).** The process determines updated point cloud colors for the points in the colored point cloud using the frames in the video and the updates pose estimates with adjustments (operation **804).**

The process repeats adjusting the updated pose estimates using the frames and the colored point cloud and determining the updated point cloud colors for the points in the colored point cloud using the frames in the video and the updated pose estimates until the pose estimates with the adjustments meet a threshold (operation **806).** The process terminates thereafter.

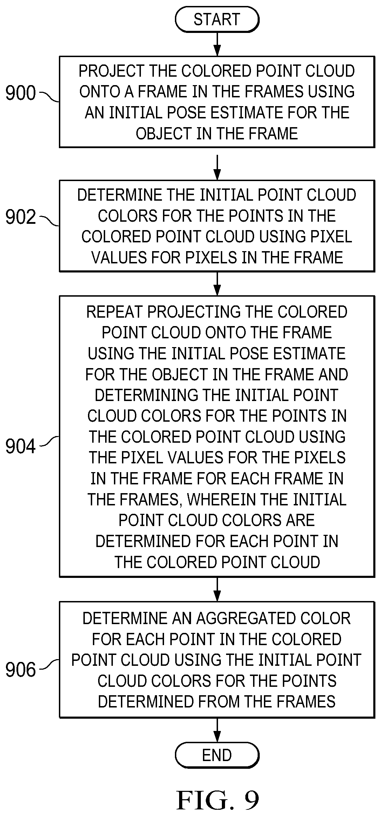

With reference now to **Figure 9****,** an illustration of a flowchart of a process for estimating point cloud colors is depicted in accordance with an illustrative embodiment. The process in this figure is an example of an implementation for operation **800 in** **Figure 8****.**

The process projects the colored point cloud onto a frame in the frames using an initial pose estimate for the object in the frame (operation **900).** This pose estimate is for the frame. In other words, the pose estimate is for the pose of the object in the frame. The process determines the initial point cloud colors for the points in the colored point cloud using pixel values for pixels in the frame (operation **902).** The process repeats projecting the colored point cloud onto the frame using the initial pose estimate for the object in the frame and determining the initial point cloud colors for the points in the colored point cloud using the pixel values for the pixels in the frame for each frame in the frames, wherein the initial point cloud colors are determined for each point in the colored point cloud (operation **904).**

The process determines an aggregated color for each point in the colored point cloud using the initial point cloud colors for the points determined from the frames (operation **906).** The process terminates thereafter. In operation **906,** the aggregated color for a point is a statistical measure across the frames. In this example, aggregated color **230** for a point can be a statistical measure selected from at least one of a mean, a median, or a weighted average of the point cloud colors determined for the point, or some other statistical measure.

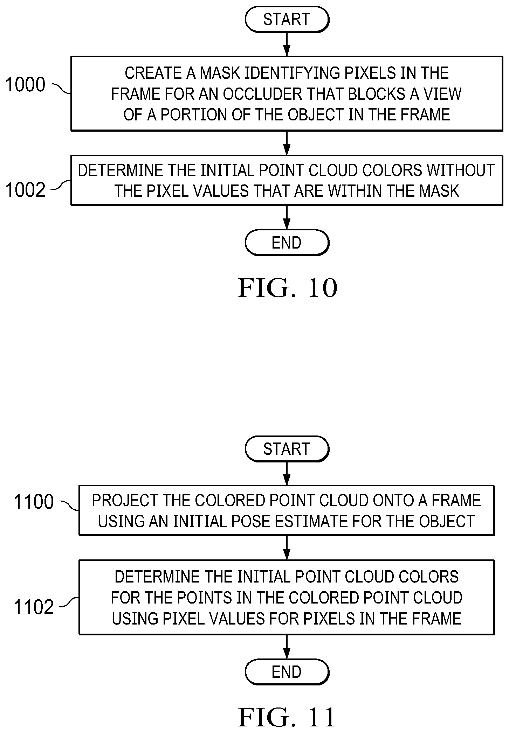

Next in **Figure 10****,** an illustration of a flowchart of a process for taking into account an occluder of the object is depicted in accordance with an illustrative embodiment. The process in this flowchart is an example of additional operations that can be performed with the operations in **Figure 8****.**

The process creates a mask identifying pixels in the frame for an occluder that blocks a view of a portion of the object in the frame (operation **1000).** The process determines the initial point cloud colors without the pixel values that are within the mask (operation **1002).** The process terminates thereafter.

Turning now to **Figure 11****,** an illustration of a flowchart of a process for estimating the point cloud colors is depicted in accordance with an illustrative embodiment. The process in this figure is an example of an implementation for operation **800** in **Figure 8****.** In this example, a single frame is used as opposed to using multiple frames to determine colors using all of the frames and pose estimates for those frames.

The process projects the colored point cloud onto a frame using an initial pose estimate for the object (operation **1100).** The process determines the initial point cloud colors for the points in the colored point cloud using pixel values for pixels in the frame (operation **1102).** The process terminates thereafter.

In the flowchart for this example, a pose for a single frame can be used to determine colors for points in the colored point cloud. For example, this process can be used to obtain an initial pose estimate for the first frame in the video. A colored point cloud can be constructed from the first frame. Afterwards, pose estimation can be performed frame-by-frame in order to obtain a set of coarse pose estimates for the frames in the video.

When performed frame-by-frame, each frame's pose estimation may use the previous frame's pose estimate as an initial pose estimate. For example, this process can be performed via smoothing using a Kalman filter to produce a filtered sequence of pose estimates that removes spurious estimates from the initial sequence of pose estimates. After the initial sequence of pose estimates are obtained and smoothed, the filtered sequence of pose estimates can be used in the dataflow described in **Figure 7****.**

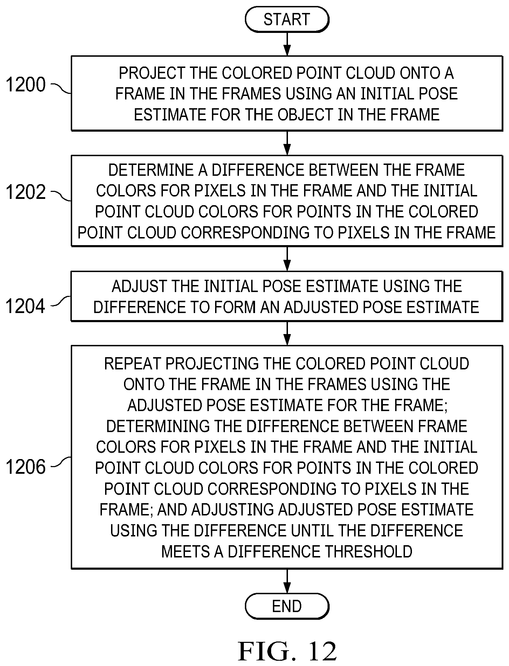

In **Figure 12****,** an illustration of a flowchart of a process for adjusting initial pose estimates is depicted in accordance with an illustrative embodiment. The process in this flowchart is an example of an implementation for operation **802** in **Figure 8****.**

The process projects the colored point cloud onto a frame in the frames using an initial pose estimate for the object in the frame (operation **1200).** The process determines a difference between the frame colors for pixels in the frame and the initial point cloud colors for points in the colored point cloud corresponding to pixels in the frame (operation **1202).** The process adjusts the initial pose estimate using the difference to form an adjusted pose estimate (operation **1204).** In operation **1204,** the pose estimates can be adjusted using a numerical optimizer with an objective function.

The process repeats projecting the colored point cloud onto the frame in the frames using the adjusted pose estimate for the frame; determining the difference between frame colors for pixels in the frame and the initial point cloud colors for points in the colored point cloud corresponding to pixels in the frame; and adjusting adjusted pose estimate using the difference until the difference meets a difference threshold (operation **1206).** The process terminates thereafter. In operation **1206,** the difference is used by the numerical optimizer to make adjustments. The difference threshold on example of threshold **228 in** **Figure 2****.** In this example, difference threshold is the amount of error between colors in colored point cloud and the colors identified for pixels corresponding to points in the frames. This threshold can be selected based on the level or accuracy of the pose estimate that is obtained.

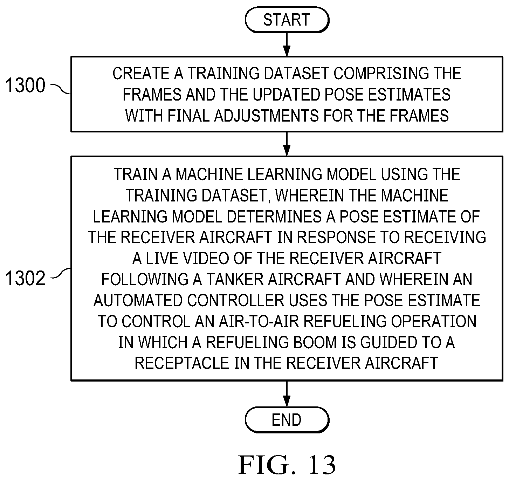

With reference now to **Figure 13****,** an illustration of a flowchart of a process for training a machine learning model using the adjusted pose estimates is depicted in accordance with an illustrative embodiment. The process in **Figure 13** is an example of additional operations that can be performed with the operations in **Figure 8****.** In this example, the practical application of adjusting pose estimates is shown.

The process creates a training dataset comprising the frames and the pose estimates with final adjustments for the frames (operation **1300).** The process trains a machine learning model using the training dataset, wherein the machine learning model determines a pose of the receiver aircraft in response to receiving a live video of the receiver aircraft following a tanker aircraft and wherein an automated controller uses the pose to control an air-to-air refueling operation in which a refueling boom is guided to a receptacle in the receiver aircraft (operation **1302).** The process terminates thereafter.

The flowcharts and block diagrams in the different depicted embodiments illustrate the architecture, functionality, and operation of some possible implementations of apparatuses and methods in an illustrative embodiment. In this regard, each block in the flowcharts or block diagrams can represent at least one of a module, a segment, a function, or a portion of an operation or step. For example, one or more of the blocks can be implemented as program instructions, hardware, or a combination of the program instructions and hardware. When implemented in hardware, the hardware can, for example, take the form of integrated circuits that are manufactured or configured to perform one or more operations in the flowcharts or block diagrams. When implemented as a combination of program instructions and hardware, the implementation may take the form of firmware. Each block in the flowcharts or the block diagrams can be implemented using special purpose hardware systems that perform the different operations or combinations of special purpose hardware and program instructions run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

For example, the process in **Figure 13** can be applied to training machine learning models to perform other types of operations or procedures other than refueling a receiver aircraft in an air-to-air refueling operation. For example, the pose estimates can be for containers in a shipyard moved by an automated crane. In this example, a machine learning model can be trained using the video with the pose estimates for containers in those frames to train machine learning model to more accurately generate pose estimates that can be used to control the automated crane to move containers.

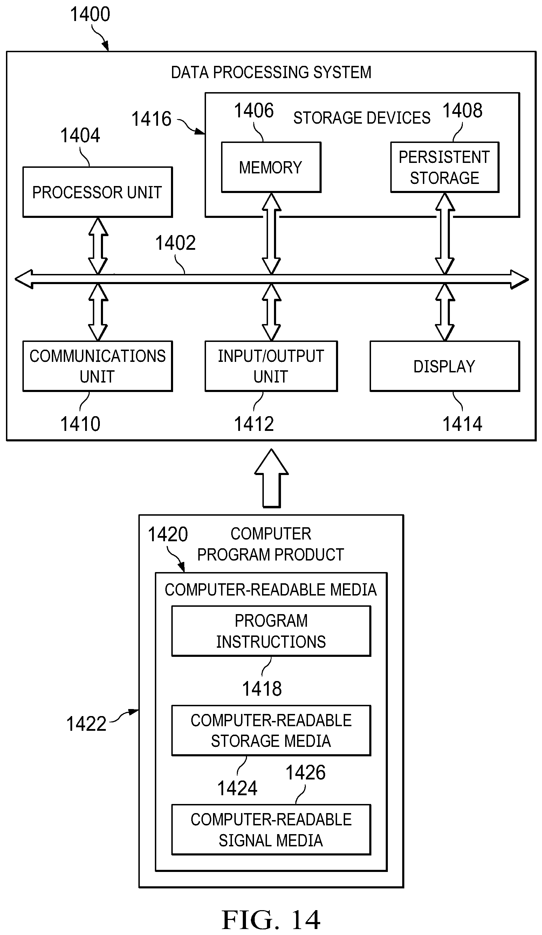

Turning now to **Figure 14****,** a block diagram of a data processing system is depicted in accordance with an illustrative embodiment. Data processing system **1400** can be used to implement computer **110** and computer **112 in** **Figure 1****.** Data processing system **1400** can be used to implement computer system **212** in **Figure 2****.** In this illustrative example, data processing system **1400** includes communications framework **1402,** which provides communications between processor unit **1404,** memory **1406,** persistent storage **1408,** communications unit **1410,** input/output (I/O) unit **1412,** and display **1414.** In this example, communications framework **1402** takes the form of a bus system.

Processor unit **1404** serves to execute instructions for software that can be loaded into memory **1406.** Processor unit **1404** includes one or more processors. For example, processor unit **1404** can be selected from at least one of a multicore processor, a central processing unit (CPU), a graphics processing unit (GPU), a physics processing unit (PPU), a digital signal processor (DSP), a network processor, or some other suitable type of processor. Further, processor unit **1404** can be implemented using one or more heterogeneous processor systems in which a main processor is present with secondary processors on a single chip. As another illustrative example, processor unit **1404** can be a symmetric multi-processor system containing multiple processors of the same type on a single chip.

Memory **1406** and persistent storage **1408** are examples of storage devices **1416.** A storage device is any piece of hardware that is capable of storing information, such as, for example, without limitation, at least one of data, program instructions in functional form, or other suitable information either on a temporary basis, a permanent basis, or both on a temporary basis and a permanent basis. Storage devices **1416** may also be referred to as computer-readable storage devices in these illustrative examples. Memory **1406,** in these examples, can be, for example, a random-access memory or any other suitable volatile or non-volatile storage device. Persistent storage **1408** may take various forms, depending on the particular implementation.

For example, persistent storage **1408** may contain one or more components or devices. For example, persistent storage **1408** can be a hard drive, a solid-state drive (SSD), a flash memory, a rewritable optical disk, a rewritable magnetic tape, or some combination of the above. The media used by persistent storage **1408** also can be removable. For example, a removable hard drive can be used for persistent storage **1408.**

Communications unit **1410,** in these illustrative examples, provides for communications with other data processing systems or devices. In these illustrative examples, communications unit **1410** is a network interface card.

Input/output unit **1412** allows for input and output of data with other devices that can be connected to data processing system **1400.** For example, input/output unit **1412** may provide a connection for user input through at least one of a keyboard, a mouse, or some other suitable input device. Further, input/output unit **1412** may send output to a printer. Display **1414** provides a mechanism to display information to a user.

Instructions for at least one of the operating system, applications, or programs can be located in storage devices **1416,** which are in communication with processor unit **1404** through communications framework **1402.** The processes of the different embodiments can be performed by processor unit **1404** using computer-implemented instructions, which may be located in a memory, such as memory **1406.**

These instructions are referred to as program instructions, computer-usable program instructions, or computer-readable program instructions that can be read and executed by a processor in processor unit **1404.** The program instructions in the different embodiments can be embodied on different physical or computer-readable storage media, such as memory **1406** or persistent storage **1408.**

Program instructions **1418** are located in a functional form on computer-readable media **1420** that is selectively removable and can be loaded onto or transferred to data processing system **1400** for execution by processor unit **1404.** Program instructions **1418** and computer-readable media **1420** form computer program product **1422** in these illustrative examples. In the illustrative example, computer-readable media **1420** is computer-readable storage media **1424.**

Computer-readable storage media **1424** is a physical or tangible storage device used to store program instructions **1418** rather than a medium that propagates or transmits program instructions **1418.** Computer-readable storage media **1424** may be at least one of an electronic storage medium, a magnetic storage medium, an optical storage medium, an electromagnetic storage medium, a semiconductor storage medium, a mechanical storage medium, or other physical storage medium. Some known types of storage devices that include these mediums include: a diskette, a hard disk, a random access memory (RAM), a read-only memory (ROM), an erasable programmable read-only memory (EPROM or Flash memory), a static random access memory (SRAM), a compact disc read-only memory (CD-ROM), a digital versatile disk (DVD), a memory stick, a floppy disk, a mechanically encoded device, such as punch cards or pits / lands formed in a major surface of a disc, or any suitable combination thereof.

Computer-readable storage media **1424,** as that term is used in the present disclosure, is not to be construed as storage in the form of transitory signals per se, such as at least one of radio waves or other freely propagating electromagnetic waves, electromagnetic waves propagating through a waveguide, light pulses passing through a fiber optic cable, electrical signals communicated through a wire, or other transmission media.

Further, data can be moved at some occasional points in time during normal operations of a storage device. These normal operations include access, de-fragmentation or garbage collection. However, these operations do not render the storage device as transitory because the data is not transitory while the data is stored in the storage device.

Alternatively, program instructions **1418** can be transferred to data processing system **1400** using computer-readable signal media **1426.** The computer-readable signal media are signals and can be, for example, a propagated data signal containing program instructions **1418.** For example, the computer-readable signal media can be at least one of an electromagnetic signal, an optical signal, or any other suitable type of signal. These signals can be transmitted over connections, such as wireless connections, optical fiber cable, coaxial cable, a wire, or any other suitable type of connection.

Further, as used herein, "computer-readable media **1420"** can be singular or plural. For example, program instructions **1418** can be located in computer-readable media **1420** in the form of a single storage device or system. In another example, program instructions **1418** can be located in computer-readable media **1420** that is distributed in multiple data processing systems. In other words, some instructions in program instructions **1418** can be located in one data processing system while other instructions in program instructions **1418** can be located in one data processing system. For example, a portion of program instructions **1418** can be located in computer-readable media **1420** in a server computer while another portion of program instructions **1418** can be located in computer-readable media **1420** located in a set of client computers.

The different components illustrated for data processing system **1400** are not meant to provide architectural limitations to the manner in which different embodiments can be implemented. In some illustrative examples, one or more of the components may be incorporated in or otherwise form a portion of, another component. For example, memory **1406,** or portions thereof, may be incorporated in processor unit **1404** in some illustrative examples. The different illustrative embodiments can be implemented in a data processing system including components in addition to or in place of those illustrated for data processing system **1400.** Other components shown in **Figure 14** can be varied from the illustrative examples shown. The different embodiments can be implemented using any hardware device or system capable of running program instructions **1418.**

Thus, illustrative examples provide a method, apparatus, system, and computer program product for close estimation. In one illustrative example, pose estimation system comprising a computer system and a pose estimator located in the computer system. The pose estimator is configured to estimate initial point cloud colors for points in a colored point cloud of a surface of an object using frames in a video of the object and initial pose estimates for the object in the frames. The pose estimator is configured to adjust the initial pose estimates using the frames and the colored point cloud to form updated pose estimates. The pose estimator is configured to determine updated point cloud colors for the points in the colored point cloud using the frames in the video and the updated pose estimates. The pose estimator is configured to repeat adjusting the updated pose estimates using the frames and the colored point cloud and determining the updated point cloud colors for the points in the colored point cloud using the frames in the video and the updated pose estimates until the updated pose estimates meet a threshold.

With the use of pose estimations with adjustments performed in the illustrative examples, these posts estimates can be used to train machine learning models to generate processes for use in controlling operations such as air-to-air refueling. In another illustrative example, these pose estimates can be used to model processes.

Further, the present disclosure comprises, without limitation, the following examples:
According to a first example, this is provided a computer implemented method for pose estimation, comprising:
   estimating, by a number of processor units, initial point cloud colors for points in a colored point cloud of a surface of an object using frames in a video of the object and initial pose estimates for the object in the frames;
   adjusting, by the number of processor units, the initial pose estimates to form updated pose estimates using the frames and the colored point cloud;
   determining, by the number of processor units, updated point cloud colors for the points in the colored point cloud using the frames in the video and the updated pose estimates; and
   repeating, by the number of processor units, adjusting the updated pose estimates using the frames and the colored point cloud and determining the updated point cloud colors for the points in the colored point cloud using the frames in the video and the updated pose estimates until the updated pose estimates meet a threshold.
Example 2. The computer implemented method of example 1, wherein estimating, by the number of processor units, the initial point cloud colors comprises:
   projecting, by the number of processor units, the colored point cloud onto a frame in the frames using an initial pose estimate for the object in the frame;
   determining, by the number of processor units, the initial point cloud colors for the points in the colored point cloud using pixel values for pixels in the frame;
   repeating, by the number of processor units, projecting the colored point cloud onto the frame using the initial pose estimate for the object in the frame and determining the initial point cloud colors for the points in the colored point cloud using the pixel values for the pixels in the frame for each frame in the frames, wherein the initial point cloud colors are determined for each point in the colored point cloud; and
   determining, by the number of processor units, an aggregated color for each point in the colored point cloud using the initial point cloud colors for the points determined from the frames.
Example 3. The computer implemented method of example 2, wherein the aggregated color for a point in the points is selected from at least one of a mean, a median, or a weighted average of the initial point cloud colors determined for the point.
Example 4. The computer implemented method of example 2 or 3, further comprising:
   creating, by the number of processor units, a mask identifying pixels in the frame for an occluder that blocks a view of a portion of the object in the frame; and
   determining, by the number of processor units, initial point cloud colors without the pixel values that are within the mask.
Example 5. The computer implemented method of example 1, wherein estimating, by the number of processor units, the initial point cloud colors comprises:
   projecting, by the number of processor units, the colored point cloud onto a frame using an initial pose estimate for the object; and
   determining, by the number of processor units, the initial point cloud colors for the points in the colored point cloud using pixel values for pixels in the frame.
Example 6. The computer implemented method of example 1, wherein adjusting, by the number of processor units, the initial pose estimates comprises:
   projecting, by the number of processor units, the colored point cloud onto a frame in the frames using an initial pose estimate for the object in the frame;
   determining, by the number of processor units, a difference between frame colors for pixels in the frame and the initial point cloud colors for points in the colored point cloud corresponding to pixels in the frame; adjusting, by the number of processor units, the initial pose estimate using the difference to form an adjusted pose estimate; and
   repeating, by the number of processor units, projecting the colored point cloud onto the frame in the frames using the adjusted pose estimate for the frame;
   determining the difference between frame colors for pixels in the frame and the initial point cloud colors for points in the colored point cloud corresponding to pixels in the frame; and adjusting adjusted pose estimate using the difference until the difference meets a difference threshold.
Example 7. The computer implemented method of example 6, wherein the pose estimate is adjusted using a numerical optimizer with an objective function.
Example 8. The computer implemented method of example 1, wherein the object is a receiver aircraft further comprising:
   creating, by the number of processor units, a training dataset comprising the frames and the update pose estimates with final adjustments for the frames; and
   training, by the number of processor units, a machine learning model using the training dataset, wherein the machine learning model determines a pose estimate of the receiver aircraft in response to receiving a live video of the receiver aircraft following a tanker aircraft and wherein an automated controller uses the pose estimate to control an air-to-air refueling operation in which a refueling boom is guided to a receptacle in the receiver aircraft.
Example 9. The computer implemented method of example 1, wherein each of the initial pose estimates comprises a position and orientation for the object.
Example 10. The computer implemented method of example 1, wherein the object is selected from a group comprising a mobile platform, a stationary platform, a land-based structure, an aquatic-based structure, a space-based structure, an aircraft, a receiver aircraft, a commercial aircraft, a rotorcraft, a tilt-rotor aircraft, a tilt wing aircraft, a vertical takeoff and landing aircraft, an electrical vertical takeoff and landing vehicle, a personal air vehicle, a surface ship, a tank, a personnel carrier, a train, a spacecraft, a space station, a satellite, a submarine, an automobile, a power plant, a bridge, a dam, a house, a manufacturing facility, and a building.
Example 10. A pose estimation system comprising:
   a computer system;
   a pose estimator located in the computer system, wherein the pose estimator is configured to:
      estimate initial point cloud colors for points in a colored point cloud of a surface of an object using frames in a video of the object and initial pose estimates for the object in the frames;
      adjust the initial pose estimates using the frames and the colored point cloud to form updated pose estimates; determine updated point cloud colors for the points in the colored point cloud using the frames in the video and the updated pose estimates; and
      repeat adjusting the updated pose estimates using the frames and the colored point cloud and determining the updated point cloud colors for the points in the colored point cloud using the frames in the video and the updated pose estimates until the updated pose estimates meet a threshold.
Example 12. The pose estimation system of example 11, wherein in estimating the initial point cloud colors, the pose estimator is configured to:
   project the colored point cloud onto a frame in the frames using an initial pose estimate for the object in the frame;
   determine the initial point cloud colors for the points in the colored point cloud using pixel values for pixels in the frame;
   repeat projecting the colored point cloud onto the frame using the initial pose estimate for the object in the frame and determining the initial point cloud colors for the points in the colored point cloud using the pixel values for the pixels in the frame for each frame in the frames, wherein the initial point cloud colors are determined for each point in the colored point cloud; and determine an aggregated color for each point in the colored point cloud using the initial point cloud colors for the points determined from the frames.
Example 13. The pose estimation system of example 12, wherein the aggregated color for a point in the points is selected from at least one of a mean, a median, or a weighted average of the initial point cloud colors determined for the point.
Example 14. The pose estimation system of example 12, wherein the pose estimator is configured to:
   create a mask identifying pixels in the frame for an occluder that blocks a view of a portion of the object in the frame; and
   determine the initial point cloud colors without the pixel values that are within the mask.
Example 15. The pose estimation system of example 11, wherein in estimating the initial point cloud colors, the pose estimator is configured to:
   project the colored point cloud onto a frame in the frames using an initial pose estimate for the object in the frame; and
   determine the point cloud colors for the points in the colored point cloud using pixel values for pixels in the frame.
Example 16. The pose estimation system of example 11, wherein in adjusting the pose estimates, the pose estimator is configured to:
   project the colored point cloud onto a frame in the frames using an initial pose estimate for the object in the frame;
   determine a difference between frame colors for pixels in the frame and the initial point cloud colors for points in the colored point cloud corresponding to pixels in the frame;
   adjust the initial pose estimate using the difference to form an adjusted pose estimate; and
   repeat projecting the colored point cloud onto the frame in the frames using the adjusted pose estimate for the frame; determining the difference between frame colors for pixels in the frame and the initial point cloud colors for points in the colored point cloud corresponding to pixels in the frame; and adjusting adjusted pose estimate using the difference until the difference meets difference threshold.
Example 17. The pose estimation system of example 16, wherein the pose estimate is adjusted using a numerical optimizer with an objective function.
Example 18. The pose estimation system of example 11, wherein the object is a receiver aircraft and wherein the pose estimator is configured to:
   create a training dataset comprising the frames and the updated pose estimates with final adjustments for the frames; and
   train a machine learning model using the training dataset, wherein the machine learning model determines a pose estimate of the receiver aircraft in response to receiving a live video of the receiver aircraft following a tanker aircraft and wherein an automated controller uses the pose estimate to control an air-to-air refueling operation in which a refueling boom is guided to a receptacle in the receiver aircraft.
Example 19. The pose estimation system of example 11, wherein each of the pose estimates comprises a position and orientation for the object.
Example 20. The pose estimation system of example 11, wherein the object is selected from a group comprising a mobile platform, a stationary platform, a land-based structure, an aquatic-based structure, a space-based structure, an aircraft, a receiver aircraft, a commercial aircraft, a rotorcraft, a tilt-rotor aircraft, a tilt wing aircraft, a vertical takeoff and landing aircraft, an electrical vertical takeoff and landing vehicle, a personal air vehicle, a surface ship, a tank, a personnel carrier, a train, a spacecraft, a space station, a satellite, a submarine, an automobile, a power plant, a bridge, a dam, a house, a manufacturing facility, and a building.
Example 21. A computer program product for pose estimation, the computer program product comprising:
   a set of one or more computer-readable storage media;
   program instructions, collectively stored in the set of one or more computer-readable storage media, for causing a processor set to perform the following computer operations:
      estimate initial point cloud colors for points in a colored point cloud of a surface of an object using frames in a video of the object and initial pose estimates for the object in the frames;
      adjust the initial pose estimates using the frames and the colored point cloud to form updated pose estimates;
      determine updated point cloud colors for the points in the colored point cloud using the frames in the video and the updated pose estimates; and
      repeat adjusting the updated pose estimates using the frames and the colored point cloud and determining the updated point cloud colors for the points in the colored point cloud using the frames in the video and the updated pose estimates until the updated pose estimates meet a threshold.

In another example, a fueling tanker aircraft equipped with a boom which is intended to be coupled to a receptacle of a receiver aircraft for the refueling operation may comprise
a pose estimation system comprising:
a computer system;
a pose estimator located in the computer system, wherein the pose estimator is configured to perform the computer implementation method for pose estimation according to any examples described above to determine a pose estimate to guide the boom into receptacle of the receiver aircraft.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated

## Claims

1. A computer implemented method for pose estimation, comprising:
estimating (800), by a number of processor units (216), initial point cloud colors (222) for points (223) in a colored point cloud (224, 410) of a surface (225) of an object (201) using frames (221) in a video (105, 202) of the object (201) and initial pose estimate (241) for the object (201) in the frames (221);
adjusting (802), by the number of processor units (216), the initial pose estimate (241) to form updated pose estimates (227) using the frames (221) and the colored point cloud (224, 410);
determining (804), by the number of processor units (216), updated point cloud colors (226) for the points (223) in the colored point cloud (224, 410) using the frames (221) in the video (105, 202) and the updated pose estimates (227); and
repeating (806), by the number of processor units (216), adjusting the updated pose estimates (227) using the frames (221) and the colored point cloud (224, 410) and determining the updated point cloud colors (226) for the points (223) in the colored point cloud (224, 410) using the frames (221) in the video (105, 202) and the updated pose estimates (227) until the updated pose estimates (227) meet a threshold (228).

2. The computer implemented method of claim 1, wherein estimating (800), by the number of processor units (216), the initial point cloud colors (222) comprises:
projecting (900), by the number of processor units (216), the colored point cloud (224, 410) onto a frame (240) in the frames (221) using an initial pose estimate (241) for the object (201) in the frame (240);
determining (902), by the number of processor units (216), the initial point cloud colors (222) for the points (223) in the colored point cloud (224, 410) using pixel values for pixels (243) in the frame (240);
repeating (904), by the number of processor units (216), projecting the colored point cloud (224, 410) onto the frame (240) using the initial pose estimate (241) for the object (201) in the frame (240) and determining the initial point cloud colors (222) for the points (223) in the colored point cloud (224, 410) using the pixel values for the pixels (243) in the frame (240) for each frame in the frames (221), wherein the initial point cloud colors (222) are determined for each point in the colored point cloud (224, 410); and
determining (906), by the number of processor units (216), an aggregated color for each point in the colored point cloud (224, 410) using the initial point cloud colors (222) for the points (223) determined from the frames (221).

3. The computer implemented method of claim 2, wherein the aggregated color for a point in the points (223) is selected from at least one of a mean, a median, or a weighted average of the initial point cloud colors (222) determined for the point.

4. The computer implemented method of claim 2 or 3, further comprising:
creating (1000), by the number of processor units (216), a mask (235) identifying pixels (243) in the frame (240) for an occluder that blocks a view of a portion of the object (201) in the frame (240); and
determining (1002), by the number of processor units (216), initial point cloud colors (222) without the pixel values that are within the mask (235).

5. The computer implemented method of claim 4, wherein the object is a receiver aircraft and the occluder is a boom that blocks the view of a portion of the receiver aircraft in the frame (240).

6. The computer implemented method of claim 1, wherein estimating (800), by the number of processor units (216), the initial point cloud colors (222) comprises:
projecting (1100), by the number of processor units (216), the colored point cloud (224, 410) onto a frame (240) using an initial pose estimate (241) for the object (201); and
determining (1102), by the number of processor units (216), the initial point cloud colors (222) for the points (223) in the colored point cloud (224, 410) using pixel values for pixels (243) in the frame (240).

7. The computer implemented method of claim 1, wherein adjusting (802), by the number of processor units (216), the initial pose estimate (241) comprises:
projecting (1200), by the number of processor units (216), the colored point cloud (224, 410) onto a frame (240) in the frames (221) using an initial pose estimate (241) for the object (201) in the frame (240);
determining (1202), by the number of processor units (216), a difference (244, 605) between frame colors (242) for pixels (243) in the frame (240) and the initial point cloud colors (222) for points (223) in the colored point cloud (224, 410) corresponding to pixels (243) in the frame (240);
adjusting (1204), by the number of processor units (216), the initial pose estimate (241) using the difference (244, 605) to form an adjusted pose estimate; and
repeating (1206), by the number of processor units (216), projecting the colored point cloud (224, 410) onto the frame (240) in the frames (221) using the adjusted pose estimate for the frame (240); determining the difference (244, 605) between frame colors (242) for pixels (243) in the frame (240) and the initial point cloud colors (222) for points (223) in the colored point cloud (224, 410) corresponding to pixels (243) in the frame (240); and adjusting adjusted pose estimate using the difference (244, 605) until the difference (244, 605) meets a difference (244, 605) threshold (228).

8. The computer implemented method of claim 7, wherein the pose estimate is adjusted using a numerical optimizer (600) with an objective function (601).

9. The computer implemented method of claim 8, wherein the objective function (601) is configured to perform a color error calculation for the pose estimate by calculating an Euclidean distance for each point's two colors and averaging the distance for all points in colored point cloud.

10. The computer implemented method of any of claims 1 to 9, wherein the object (201) is a receiver aircraft (101), said method further comprising:
creating (1300), by the number of processor units (216), a training dataset (302) comprising the frames (221) and the update pose estimates with final adjustments for the frames (221);
training (1302), by the number of processor units (216), a machine learning model (300) using the training dataset (302), wherein the machine learning model (300) determines a pose estimate of the receiver aircraft (101) in response to receiving a live video of the receiver aircraft (101) following a tanker aircraft and wherein an automated controller uses the pose estimate to control an air-to-air refueling operation in which a refueling boom is guided to a receptacle (103) in the receiver aircraft (101).

11. The computer implemented method of claim 10, wherein each of the initial pose estimate (241) comprises a position and orientation for the object (201).

12. The computer implemented method of any of claims1 to 11, wherein the object (201) is selected from a group comprising a mobile platform, a stationary platform, a land-based structure, an aquatic-based structure, a space-based structure, an aircraft, a receiver aircraft (101), a commercial aircraft, a rotorcraft, a tilt-rotor aircraft, a tilt wing aircraft, a vertical takeoff and landing aircraft, an electrical vertical takeoff and landing vehicle, a personal air vehicle, a surface ship, a tank, a personnel carrier, a train, a spacecraft, a space station, a satellite, a submarine, an automobile, a power plant, a bridge, a dam, a house, a manufacturing facility, and a building.

13. A pose estimation system (211) comprising:
a computer system (212);
a pose estimator (214) located in the computer system, wherein the pose estimator is configured to perform the computer implementation method for pose estimation of any of claims 1 to 12.

14. A computer program product (1422) for pose estimation, the computer program product (1422) comprising:
a set of one or more computer-readable storage media (1424);
program instructions (1418), collectively stored in the set of one or more computer-readable storage media, for causing a processor set to perform the implemented method for pose estimation of any of claims 1 to 12.

15. A fueling tanker aircraft (100) equipped with a boom (102) which is intended to be coupled to a receptacle (103) of a receiver aircraft (101) for the refueling operation comprises:
a pose estimation system (211) comprising:
a computer system (212);
a pose estimator (214) located in the computer system,
wherein the pose estimator is configured to perform the computer implementation method for pose estimation of any of claims 1 to 12 to determine a pose estimate to guide the boom (102) into receptacle (103) of the receiver aircraft (101).
